# EUROPEAN PATENT APPLICATION

(11) **EP 4 066 965 A1**
(43) Date of publication of application: **05.10.2022**
(21) Application number: 21757481.3
(22) Date of filing: 28.01.2021
(51) Int. Cl.: B22F 3/02, B22F 3/10, B22F 3/14

(54) **LIGHTWEIGHT WEAR-RESISTANT ALUMINUM-BASED POWDER METALLURGY COMPOSITE MATERIAL RAIL TRANSIT BRAKE DISC AND PREPARATION METHOD THEREFOR**

(30) Priority: 19.02.2020 CN 202010101037
(71) Applicant: Hunan Jintian Aluminum Hi Tech Co., Ltd, Hunan 416100 (CN)
(72) Inventor: HUO, Shuhai, Hunan 416100 (CN); CAO, Liuxu, Hunan 416100 (CN); JIANG, Zhaoru, Hunan 416100 (CN); LIU, Chunxuan, Hunan 416100 (CN); WU, Zhimin, Hunan 416100 (CN); WANG, Chang, Hunan 416100 (CN); QIU, Zhenyu, Hunan 416100 (CN); DAI, Qingsong, Hunan 416100 (CN); XIE, Yi, Hunan 416100 (CN); WU, Yun, Hunan 416100 (CN)
(74) Representative: Appleyard Lees IP LLP
(86) International application number: PCT/CN2021/074119
(87) International publication number: WO 2021/164516

(57) **Abstract**

A lightweight wear-resistant aluminum-based powder metallurgy composite material rail transit brake disc and a preparation method therefor. The rail transit brake disc is composed of a wear-resistant aluminum-based composite material, and the wear-resistant aluminum-based composite material consists of aluminum powder, a main alloying element, a trace element, and ceramic particles, wherein the main alloying element is selected from at least one of Cu, Si, Fe, Ni, and Mg, and the trace element is selected from at least one of Sr, Ce, and Sn. The rail transit brake disc is prepared from an aluminum-based powder metallurgy composite material by means of cold press molding, sintering and integrated hot pressing shaping processes; the prepared rail transit brake disc has a series of advantages of no damage, no defect, good compactness, high strength, and the like; upon comparison with a conventional cast iron brake disc, the weight is reduced by 40%-60%, saving energy consumption; the preparation method therefor is simple, the cost is low, and the rate of finished products is high; the preparation method can be used for preparing rail transit brake discs of different dimensions and structures, and satisfies the requirements of industrialized mass continuous production.

## Description

### CROSS-REFERENCE TO RELATED APPLICATION

This application claims priority to Chinese Patent Application No. 202010101037.9, entitled "LIGHTWEIGHT WEAR-RESISTANT ALUMINUM-BASED POWDER METALLURGY COMPOSITE MATERIAL RAIL TRANSIT BRAKE DISC AND PREPARATION METHOD THEREFOR" and filed with the Chinese Patent Office on February 19, 2020, the entire contents of which are incorporated herein by reference.

### TECHNICAL FIELD

The present disclosure relates to the field of rail transit brake disc technologies, particularly to a rail transit brake disc prepared from a lightweight wear-resistant aluminum-based powder metallurgy composite material, and further to a method for preparing a rail transit brake disc from the lightweight wear-resistant aluminum-based composite material by means of a process combining cold press molding, sintering, and hot press shaping, and belongs to the field of rail transit brake disc preparation technologies.

### BACKGROUND

Light weight is one of the most effective means to realize energy saving and consumption reduction of rail transit vehicles. Conventional transportation equipment engines, brake discs, and the like, are made of iron metal materials, mainly including cast iron, cast steel, forged steel, and the like, which have high density and poor thermal conductivity and are prone to defects such as thermal cracking. The most common material is gray cast iron, which has tensile strength of about 250 MPa and an elongation of only 0.3% to 0.8%. Therefore, the application of high-performance light metal materials instead of steel and iron materials to key moving parts may not only reduce the weight of the entire vehicle and reduce the momentum of high-speed moving parts of the transportation equipment, but also significantly improve the dynamic performance of the transportation equipment and reduce energy consumption. High-performance brake rotors are the foundation of development of high-speed trains. With the rapid development of the high-speed trains, higher and newer requirements are put forward on brake materials. The brake materials have to be guaranteed to have high friction properties and stability at high speed and high energy, as well as excellent fatigue resistance, thermal crack propagation resistance and high wear resistance. In addition, in case of an emergency, the high-speed trains have to be guaranteed to have a safe emergency braking distance. At present, pure air disc brake is the most important means to implement safe braking of high speed trains of 300 km/h grade. Brake discs of high-speed railways belong to unsprung mass, whose mass accounts for almost 20% of an entire bogie. The light weight of the brake disc helps to improve the dynamics quality of the bogie and reduce energy consumption of traction. Japanese Shinkansen test results show that reduction of an axle load from 16 tons to 11.3 tons can reduce operating costs by 34%. Therefore, the preparation of lightweight rail transit brake discs has become an urgent problem to be solved.

Aluminum-based composite materials have a series of advantages such as low density, high specific strength, good thermal stability, good thermal conductivity, and the like, are important materials to support "Made in China 2025", realize environmentfriendly society, save energy and reduce consumption, and are new materials in urgent need in key application fields. The use of the aluminum-based composite materials as materials of the rail transit brake discs can greatly reduce weights and achieve an effect of energy saving and emission reduction. However, simple particle reinforced aluminum-based composite materials are soft and difficult to meet requirements on brake wear of vehicles under changeable working conditions. Therefore, the situation is expected to improve by adding other alloying elements and trace elements into the aluminum-based composite material and increasing the content of ceramic particles in the reinforcement. Germany takes the lead in the study of aluminum-based composite material brake discs. It is reported that the mass of each brake disc has been reduced from 115 kg to 65 kg. However, due to the use of a casting method, it is difficult to prevent problems such as pores and defects during the casting. In addition, the method limits an upper limit of the content of ceramic particles in the aluminum-based composite material to only less than 20%, which makes it difficult to improve mechanical properties greatly and meet braking requirements of higher-speed trains. Japan and France have also conducted research on the aluminum-based composite material brake discs, which is still in a research and experiment stage. However, the domestic research in this field is basically blank. The difficulty is that the rail transit brake discs have very large dimensions, and it is difficult to meet use requirements on organization and performance by using conventional preparation processes. Although the content of ceramic particles can be increased and the use requirements can be met with a conventional powder metallurgy method, such products having large dimensions and complex structures cannot be prepared, which are prone to cracks. Therefore, it is expected to prepare ceramic particle reinforced aluminum-based composite material rail transit brake discs as required by using a principle of powder metallurgy through innovation and improvement of processes and parameters.

### SUMMARY

### Technical Problem

Conventional rail transit brake discs are mostly made of iron metal materials, which have high density and poor thermal conductivity and are prone to defects such as thermal cracking, and have the problems of high energy consumption and being not conducive to environmental protection. The content of the ceramic particles in the aluminum-based composite material brake discs prepared by an existing preparation method such as stirring casting is difficult to break through the upper limit or the ceramic particles are unevenly distributed, and problems of pores, shrinkage, and cracking easily occur during the preparation and molding.

### Technical Solution

With respect to the light weight trend of the rail transit equipment and the defects in existing preparation technologies of rail transit brake discs, an objective of the present disclosure is to provide a lightweight wear-resistant aluminum-based composite material rail transit brake disc to solve the problems that the conventional cast iron brake discs have high energy consumption and are not conducive to environmental protection and the pure aluminum-based powder metallurgy composite material brake discs are not wear-resistant and cannot meet braking requirements.

In order to achieve the above technical objective, the present disclosure provides a lightweight wear-resistant aluminum-based powder metallurgy composite material rail transit brake disc, wherein the rail transit brake disc is composed of a wear-resistant aluminum-based composite material; the wear-resistant aluminum-based composite material consists of aluminum powder, a main alloying element, a trace element, and ceramic particles; the main alloying element is at least one selected from the group consisting of Cu, Si, Fe, Ni, and Mg; and the trace element is at least one selected from the group consisting of Sr, Ce, and Sn.

In a preferred solution, the wear-resistant aluminum-based composite material includes, in percentage by mass: 3% to 12% of the main alloying element (the mass fraction of each main alloying element is adjustable in a range of 0.2% to 12%); no more than 1.5% of the trace element (the mass fraction of each trace element is adjustable in a range of 0 to 1.5%); 20% to 75% of the ceramic particles (the mass fraction of each ceramic particle is adjustable in a range of 20% to 75%); and the balance of the aluminum powder (the total mass of the aluminum powder, the main alloying element, the trace element, and the ceramic particles is 100%).

In the technical solution of the present disclosure, it is proposed that alloying elements such as Cu, Si, Fe, Ni, and Mg in appropriate amounts are introduced into the aluminum-based composite material. By controlling chemical components and a sintering system, the alloying elements can generate a liquid phase inside during the sintering to promote the sintering, and generate in situ a binary or multinary fine intermetallic compound strengthening phase dominated by the elements, which can strengthen mechanical properties of the aluminum-based composite material and improve wear resistance thereof. The mass fraction plays an important role in strengthening the effect. If the mass fraction is lower than a preferable range, the strengthening effect cannot be achieved. If the mass fraction is excessively large and higher than the preferable range, the intermetallic compounds cannot be formed, the wear resistance cannot be improved, and the mass of the brake disc is increased, thereby achieving no effect of weight reduction.

In the technical solution of the present disclosure, it is also proposed that trace elements such as Sr, Ce, and Sn in small amounts are added into the aluminum-based composite material. The trace elements in small amounts can promote the alloying elements to form the intermetallic compounds. However, if the content of the trace element is excessively high, other intermetallic compound impurities may be generated, affecting properties thereof.

In a preferred solution, the ceramic particles are at least one selected from the group consisting of SiC, Al₂O₃, and Si₃N₄.

In the technical solution of the present disclosure, the ceramic particles such as SiC, Al₂O₃, and Si₃N₄ are introduced into the aluminum-based composite material. The ceramic particles have extremely high strength and excellent high-temperature resistance, and have always been the first choice of composite material reinforcement, which can greatly improve comprehensive properties of the composite material. Besides, the higher the content, the more significant the reinforced effect of wear resistance and temperature resistance. However, due to the limitation of the existing preparation methods, it has been unable to break through the problems that the content of the ceramic particles cannot be too high and the comprehensive properties are poor because of poor wetness of ceramics and aluminum alloy in the brake disc. In the technical solution of the present disclosure, the upper limit of the content of the ceramic particles is increased by means of a process combining cold press molding, sintering, and hot press shaping. For example, the content of the ceramic particles, in percentage by mass, may be higher than 20%, preferably higher than 40%, even higher than 60%, or up to 75%, which further improves the wear resistance of the brake disc.

Another objective of the present disclosure is to provide a method for preparing a rail transit brake disc by means of a process combining cold press molding, sintering, and hot press shaping. The rail transit brake disc prepared by the method has a light weight and excellent wear resistance and brake performance, may be widely used in the manufacturing of various rail transit brake systems, and solves the problems that the content of the ceramic particles in the aluminum-based composite material brake disc is difficult to break through the upper limit, the ceramic particles are unevenly distributed, and pores, shrinkage, and cracking easily occur during the preparation and molding.

The present disclosure further provides a method for preparing a lightweight wear-resistant aluminum-based powder metallurgy composite material rail transit brake disc, including the following steps:
1) filling wear-resistant aluminum-based composite material mixed powder into a ring disc-shaped mold for cold press molding at room temperature and demolding, to obtain a rail transit brake disc blank;
2) sintering and molding the rail transit brake disc blank to obtain a rail transit brake disc precursor;
3) placing the rail transit brake disc precursor in a hot press shaping mold for pressing and shaping, to obtain a rail transit brake disc rough body; and
4) machining the rail transit brake disc rough body, to obtain the rail transit brake disc.

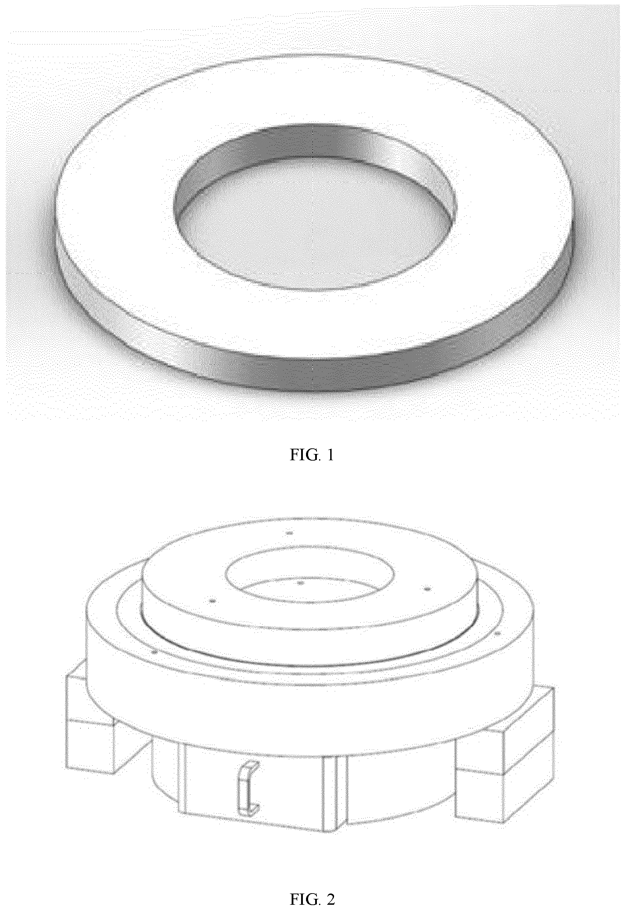

In a preferred solution, the cold press molding is performed under conditions of a pressure of 150 MPa to 300 MPa, a pressurization rate of 1 mm/s to 5 mm/s, and a pressure-holding time of 3 s to 10 s. The wear-resistant aluminum-based composite material mixed powder is filled into an ultra-large ring disc-shaped mold, and undergoes cold press molding at room temperature after mold closing and exhausting. The molded rail transit brake disc blank is well combined and is an ultra-large ring disc-shaped blank, whose outer diameter may reach 600 mm to 900 mm, inner diameter may reach 200 mm to 450 mm, and height may reach 20 mm to 140 mm. The blank after cold press is in the shape shown in FIG. 1. A cold press molding mold is shown in FIG. 2. The interior of the mold is designed conventionally according to the shape of the blank.

In a preferred solution, a process of the sintering and molding includes wax removal, sintering, and cooling.

In a preferred solution, the sintering and molding is performed under the following conditions: at a heating rate of 8 °C/min to 15 °C/min, first heating the rail transit brake disc blank to 350°C to 450°C for 15 min to 30 min, then heating the rail transit brake disc blank to 580°C to 620°C for 25 min to 45 min, and finally cooling the rail transit brake disc blank to below 500°C under nitrogen protection. Under a more preferred condition, the content of oxygen in nitrogen is less than 10 ppm, and a dew point temperature is below -40°C. In the technical solution of the present disclosure, a sintering temperature curve of the aluminum-based powder metallurgy composite material brake disc is proposed for the first time, with a purpose of making the temperature of the blank near a liquidus and slowly cooling down to near a solidus along with furnace cooling, so as to improve the plasticity of the blank, and removing an internal stress caused by sintering and cooling, which ensures defect-free forming of the brake disc blank with the oversized size.

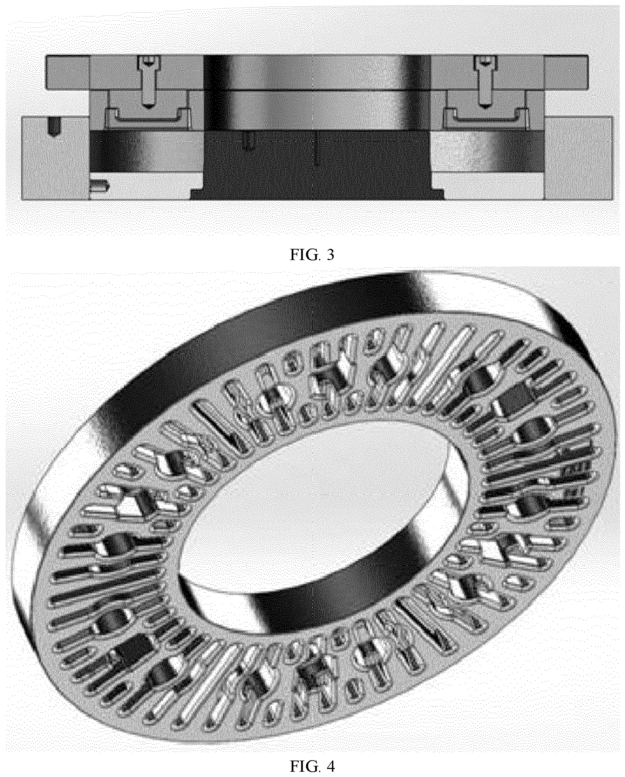

In a preferred solution, the pressing and shaping is "integrated hot press shaping" under conditions of a pressing temperature of 500°C to 600°C, a pressure of 150 MPa to 300 MPa, a pressurization rate of 1 mm/s to 5 mm/s, and a pressure-holding time of 5 s to 30 s. The brake disc rough body after pressing and shaping has a contour close to a net dimension and an integral radiation rib structure. A hot press mold is as shown in FIG. 3. An upper mold is as shown in FIG. 4. Conventional powder metallurgy products involve no hot press shaping processes. In the technical solution of the present disclosure, it is first proposed to add the "integrated hot press shaping" process to the preparation of the rail transit brake disc and use the above parameters. On the one hand, the compactness of the rail transit brake disc precursor can be further improved, so as to comprehensively improve the mechanical properties of the brake disc, especially the wear resistance and the stiffness of the material. On the other hand, a complex radiation rib shape can be directly obtained by pressing, the radiation rib structure is ensured to be integral without defects such as missing angles and cracks through the control over the parameters, a contour dimension of the brake disc blank is adjusted to be closer to the net dimension, and possible defects during the cold press and sintering may also be repaired to increase the rate of finished products.

In a preferred solution, the machining includes removing burrs, flashes, and surface oxide layers. The machining is rough turning.

In a preferred solution, the obtained lightweight wear-resistant aluminum-based powder metallurgy composite material rail transit brake disc has a density of 2.60 g/cm³ to 2.95 g/cm³.

In a preferred solution, the preparation of the wear-resistant aluminum-based composite material mixed power involves: mixing the aluminum powder, the main alloying element, the trace element, and the ceramic particles in a mixer at a rotation speed of 15 r/min to 35 r/min for 35 min to 60 min.

With the preparation process for the new lightweight wear-resistant aluminum-based powder metallurgy composite material rail transit brake disc according to the technical solution of the present disclosure, on the one hand, the wear resistance, comprehensive mechanical properties, and machining properties are improved on the basis of adjusting components of the aluminum-based powder metallurgy composite material, so that the braking requirements of the rail transit brake disc can be met, and the weight is lower. On the other hand, various rail transit brake discs close to the net dimension and having no defects are obtained by using the principle of powder metallurgy, by means of cold press molding, sintering, and integrated hot press shaping processes and the control over corresponding parameters.

The mold referred to in the present disclosure may be designed conventionally according to the shape of the existing rail transit brake disc.

### Beneficial Effect

Compared with the related art, the technical solution of the present disclosure brings the following beneficial technical effects.
1) The aluminum-based powder metallurgy rail transit brake disc obtained in the present disclosure greatly reduces the weight of the brake disc, has the advantages of good wear resistance and brake performance, good compactness, no pores, and no cracks, and can greatly reduce energy consumption and achieve an effect of energy saving and emission reduction while meeting the braking requirements of rail transit vehicles, which has a density of 2.60 g/cm³ to 2.95 g/cm³, rigidity above 60 HRB, tensile strength above 230 MPa, and can be widely used in various rail transit vehicle braking systems.
2) With respect to the material used for the rail transit brake disc in the present disclosure, large amounts of ceramic particles and fine intermetallic compounds are introduced to form an Al-particle strengthening phase, so as to greatly improve the mechanical properties of the aluminum-based composite material, especially the wear resistance and stiffness of the material.
3) The principle of powder metallurgy is adopted in the process of preparation of the aluminum-based powder metallurgy composite material rail transit brake disc in the present disclosure, which breaks through the upper limit of the content of the ceramic particles in the aluminum-based powder metallurgy rail transit brake disc and makes its mass fraction up to 75%, greatly improving the strength and wear resistance of the brake disc.
4) In the process of preparation of the aluminum-based powder metallurgy composite material rail transit brake disc in the present disclosure, through addition of an integrated hot press shaping process and the control over parameters of cold press, sintering, and hot press shaping processes, a rail transit brake disc with an ultra-large dimension is obtained, whose outer diameter may reach 600 mm to 900 mm, inner diameter may reach 200 mm to 450 mm, and height may reach 20 mm to 140 mm. Moreover, the brake disc is compact inside, has no pores and cracks, is close to the net dimension, and has an integral radiation rib structure, which greatly saves subsequent machining costs.
5) The process of preparation of the aluminum-based powder metallurgy composite material rail transit brake disc in the present disclosure is featured with few procedures, easy operation, low costs, a high rate of finished products, and can be applied to the preparation of rail transit brake disc in various shapes and can be used for industrialized mass continuous production.

### BRIEF DESCRIPTION OF THE DRAWINGS

FIG. 1 is a schematic diagram of a shape of a blank after cold press;
FIG. 2 shows a cold press molding mold;
FIG. 3 is an internal structure diagram of a hot press shaping mold;
FIG. 4 is an upper mold diagram of the hot press shaping mold;
FIG. 5 is a microstructural diagram of an Al-30% SiC composite material rail transit brake disc;
FIG. 6 is a pictorial diagram of an aluminum-based powder metallurgy composite material rail transit brake disc; and
FIG. 7 shows a picture of the aluminum-based powder metallurgy composite material rail transit brake disc not undergoing hot press shaping.

### DETAILED DESCRIPTION OF THE EMBODIMENTS

To facilitate understanding of the present disclosure, a more comprehensive description of the present disclosure and preferred embodiments of the present disclosure will be given below. However, the present disclosure may be implemented in many different forms and is not limited to the embodiments described herein. Rather, these embodiments are provided to make the contents disclosed in the present disclosure more fully understood.

Unless defined otherwise, all technical and scientific terms used herein have the same meanings as would generally understood by those skilled in the technical field of the present disclosure. The terms used herein in the specification of the present disclosure are for the purpose of describing specific embodiments only, and are not intended to limit the present disclosure.

### Example 1

A method for preparing an aluminum-based powder metallurgy composite material rail transit brake disc according to this embodiment was implemented according to the following steps. In step one, 4.5% of Cu, 3.5% of Mg, 1.5% of Si, 0.2% of Sr, 0.3% of Ce, 30% of SiC, and 60% of aluminum powder (all the above are mass fractions) were added to a mixer to be mixed at a speed of 20 r/min for 60 min, to obtain a wear-resistant aluminum-based composite material powder. In step two, the wear-resistant aluminum-based composite material powder treated in step one was filled into a cold press mold for cold press under conditions of a pressure of 200 MPa, a pressurization rate of 2 mm/s, and a pressure-holding time of 8 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 450°C for 20 min, then heated to 620°C for 30 min, and finally cooled to 490°C. In step four, the rail transit brake disc precursor treated in step three was placed in a hot press mold for pressing and shaping under conditions of a pressing temperature of 530°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

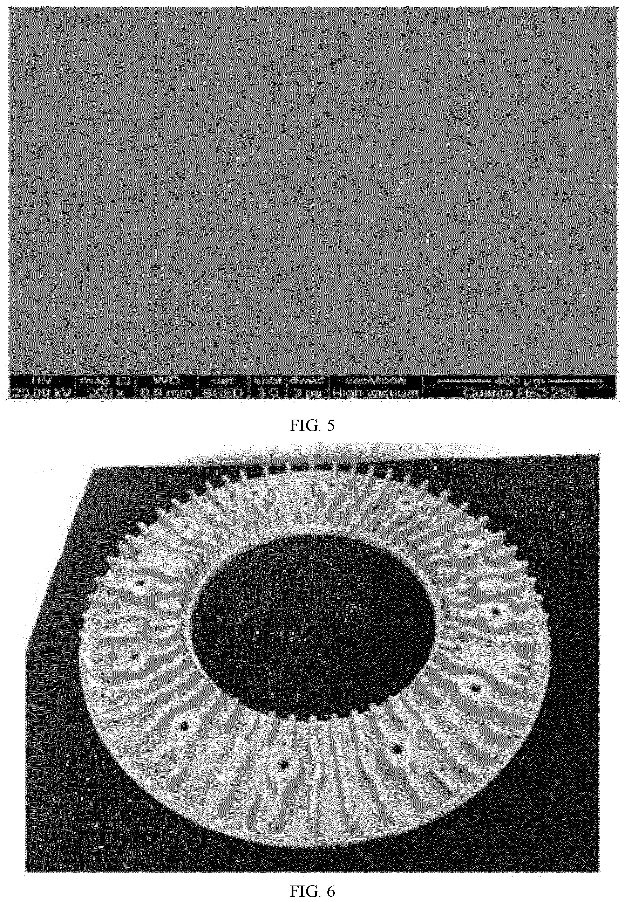

After testing, the aluminum-based powder metallurgy composite material rail transit brake disc prepared by this method has a density of 2.79 g/cm³, with mechanical properties as shown in Table 1, and also has low density and mechanics properties and an obvious lightweight effect. FIG. 5 is a scanning electron microscope microstructural diagram of an Al-30% composite material rail transit brake disc. As can be seen from FIG. 5, the brake disc is compact inside and has no pores and fine cracks, and the particles are evenly distributed. FIG. 6 shows a picture of the aluminum-based powder metallurgy composite material rail transit brake disc, from which it can be seen that the brake disc has no cracks and defects outside.

**Table 1 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 328 | 301 | 5.2 | 87 | 121 |

### Example 2

A method for preparing an aluminum-based powder metallurgy composite material rail transit brake disc according to this embodiment was implemented according to the following steps. In step one, 5% of Fe, 2% of Mg, 1% of Ni, 0.5% of Ce, 40% of SiC, and 51.5% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 250 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 2. Thus, compare with the conventional brake disc made of iron metal materials, the brake disc prepared with this material has excellent tensile strength and elongation, with enhanced stiffness and plasticity properties.

**Table 2 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 291 | 252 | 4.6 | 67 | 101 |

### Example 3

A method for preparing an aluminum-based powder metallurgy composite material rail transit brake disc according to this embodiment was implemented according to the following steps. In step one, 5% of Si, 5% of Fe, 0.5% of Ce, 0.5% of Sn, 60% of SiC, and 29% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 250 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 3. Thus, compare with the conventional brake disc made of iron metal materials, the brake disc prepared with this material has excellent tensile strength and elongation, with enhanced stiffness and plasticity properties.

**Table 3 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 298 | 264 | 3.2 | 89 | 111 |

### Example 4

A method for preparing an aluminum-based powder metallurgy composite material rail transit brake disc according to this embodiment was implemented according to the following steps. In step one, 1% of Fe, 2% of Mg, 2% of Ni, 5% of Si, 0.3% of Ce, 0.4% of Sn, 0.3% of Sr, 55% of SiC, and 34% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 300 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 300 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 4. Thus, compare with the conventional brake disc made of iron metal materials, the brake disc prepared with this material has excellent tensile strength and elongation, with enhanced stiffness and plasticity properties.

**Table 4 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 274 | 250 | 4.0 | 77 | 107 |

### Comparative Example 1

Comparative Example 1 related to a method for preparing a rail transit brake disc without adding trace elements, which was implemented according to the following steps. In step one, 5% of Fe, 2% of Mg, 1% of Ni, 40% of SiC, and 52% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 250 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 5. Compared with the properties of the brake disc in Example 2, both the strength and the rigidity are greatly reduced, the plasticity property is also very poor, and the requirements on the strength and friction of the brake disc cannot be met.

**Table 5 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 102 | 88 | 0.32 | 23 | 25 |

### Comparative Example 2

Comparative Example 2 related to a method for preparing a rail transit brake disc not undergoing pressing and shaping, which was implemented according to the following steps. In step one, 4.5% of Cu, 3.5% of Mg, 1.5% of Si, 0.2% of Sr, 0.3% of Ce, 30% of SiC, and 60% of aluminum powder (all the above are mass fractions) were added to a mixer to be mixed at a speed of 20 r/min for 60 min, to obtain a wear-resistant aluminum-based composite material powder. In step two, the wear-resistant aluminum-based composite material powder treated in step one was filled into a cold press mold for cold press under conditions of a pressure of 200 MPa, a pressurization rate of 2 mm/s, and a pressure-holding time of 8 s. In step three, the rail transit brake disc blank treated in step two was sintered under nitrogen (generally, the content of oxygen in nitrogen was less than 10 ppm, and a dew point temperature was below -40°C), and at a heating rate of 10 °C/min, was first heated to 450°C for 20 min, then heated to 620°C for 30 min, and finally cooled to 490°C. In step four, the rail transit brake disc rough body treated in step three was subjected to rough turning, and burrs, flashes and surface oxide layers were removed, to complete the preparation of the aluminum-based powder metallurgy composite material rail transit brake disc.

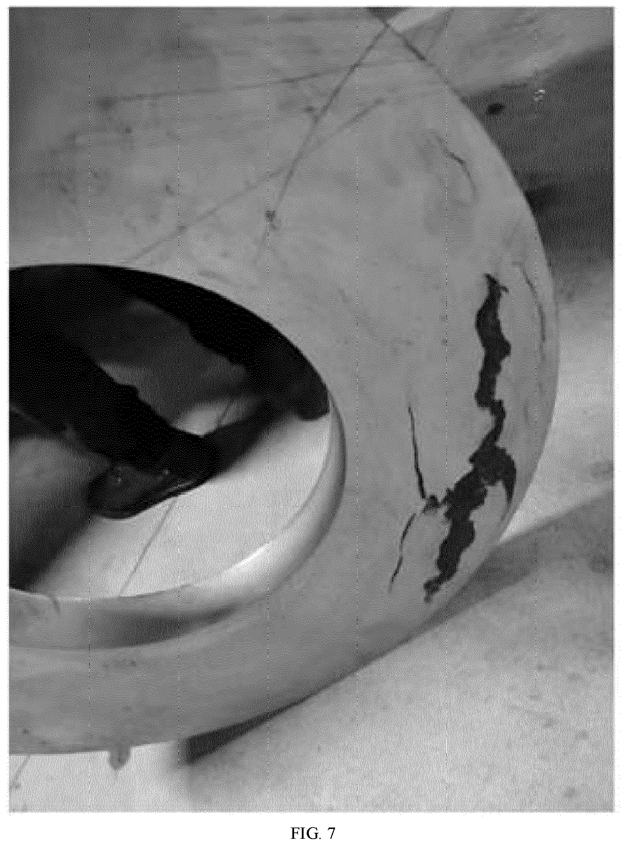

FIG. 7 shows a picture of the rail transit brake disc not undergoing pressing and shaping, from which it can be seen that the disc body cracks seriously, an internal powder bonding effect is poor, and the requirements cannot be met at all.

### Example 5

A method for preparing an aluminum-based powder metallurgy composite material rail transit brake disc according to this embodiment was implemented according to the following steps. In step one, 4.5% of Cu, 3.5% of Mg, 1.5% of Si, 0.2% of Sr, 0.3% of Ce, 30% of Al₂O₃, and 60% of aluminum powder (all the above are mass fractions) were added to a mixer to be mixed at a speed of 20 r/min for 60 min, to obtain a wear-resistant aluminum-based composite material powder. In step two, the wear-resistant aluminum-based composite material powder treated in step one was filled into a cold press mold for cold press under conditions of a pressure of 200 MPa, a pressurization rate of 2 mm/s, and a pressure-holding time of 8 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 450°C for 20 min, then heated to 620°C for 30 min, and finally cooled to 490°C. In step four, the rail transit brake disc precursor treated in step three was placed in a hot press mold for pressing and shaping under conditions of a pressing temperature of 530°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 6. Thus, compare with the conventional brake disc made of iron metal materials, the brake disc prepared with this material has excellent tensile strength and elongation, with enhanced stiffness and plasticity properties.

**Table 6 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 320 | 276 | 4.5 | 75 | 121 |

### Example 6

A method for preparing an aluminum-based powder metallurgy composite material rail transit brake disc according to this embodiment was implemented according to the following steps. In step one, 4.5% of Cu, 3.5% of Mg, 1.5% of Si, 0.2% of Sr, 0.3% of Ce, 30% of Si₃N₄, and 60% of aluminum powder (all the above are mass fractions) were added to a mixer to be mixed at a speed of 20 r/min for 60 min, to obtain a wear-resistant aluminum-based composite material powder. In step two, the wear-resistant aluminum-based composite material powder treated in step one was filled into a cold press mold for cold press under conditions of a pressure of 200 MPa, a pressurization rate of 2 mm/s, and a pressure-holding time of 8 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 450°C for 20 min, then heated to 620°C for 30 min, and finally cooled to 490°C. In step four, the rail transit brake disc precursor treated in step three was placed in a hot press mold for pressing and shaping under conditions of a pressing temperature of 530°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 7. Thus, compare with the conventional brake disc made of iron metal materials, the brake disc prepared with this material has excellent tensile strength and elongation, with enhanced stiffness and plasticity properties.

**Table 7 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 351 | 292 | 5.2 | 107 | 135 |

### Example 7

A method for preparing an aluminum-based powder metallurgy composite material rail transit brake disc according to this embodiment was implemented according to the following steps. In step one, 5% of Fe, 2% of Mg, 1% of Ni, 0.5% of Ce, 40% of Al₂O₃, and 51.5% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 250 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 8. Thus, compare with the conventional brake disc made of iron metal materials, the brake disc prepared with this material has excellent tensile strength and elongation, with enhanced stiffness and plasticity properties.

**Table 8 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 333 | 267 | 4.3 | 82 | 129 |

### Example 8

A method for preparing an aluminum-based powder metallurgy composite material rail transit brake disc according to this embodiment was implemented according to the following steps. In step one, 5% of Fe, 2% of Mg, 1% of Ni, 0.5% of Ce, 40% of Si₃N₄, and 51.5% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 250 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 9. Thus, compare with the conventional brake disc made of iron metal materials, the brake disc prepared with this material has excellent tensile strength and elongation, with enhanced stiffness and plasticity properties.

**Table 9 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 369 | 296 | 5.1 | 113 | 140 |

### Example 9

A method for preparing an aluminum-based powder metallurgy composite material rail transit brake disc according to this embodiment was implemented according to the following steps. In step one, 5% of Fe, 2% of Mg, 1% of Ni, 0.5% of Ce, 20% of SiC, 20% of Si₃N₄, and 51.5% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 250 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 10. Thus, compare with the conventional brake disc made of iron metal materials, the brake disc prepared with this material has excellent tensile strength and elongation, with enhanced stiffness and plasticity properties.

**Table 10 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 370 | 300 | 5.5 | 122 | 141 |

### Example 10

A method for preparing an aluminum-based powder metallurgy composite material rail transit brake disc according to this embodiment was implemented according to the following steps. In step one, 5% of Fe, 2% of Mg, 1% of Ni, 0.5% of Ce, 20% of SiC, 20% of Al₂O₃, and 51.5% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 250 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 11. Thus, compare with the conventional brake disc made of iron metal materials, the brake disc prepared with this material has excellent tensile strength and elongation, with enhanced stiffness and plasticity properties.

**Table 11 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 339 | 278 | 4.2 | 85 | 125 |

### Example 11

A method for preparing an aluminum-based powder metallurgy composite material rail transit brake disc according to this embodiment was implemented according to the following steps. In step one, 5% of Fe, 2% of Mg, 1% of Ni, 0.5% of Ce, 20% of Si₃N₄, 20% of Al₂O₃, and 51.5% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 250 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 12. Thus, compare with the conventional brake disc made of iron metal materials, the brake disc prepared with this material has excellent tensile strength and elongation, with enhanced stiffness and plasticity properties.

**Table 12 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 358 | 287 | 5.0 | 104 | 132 |

### Example 12

A method for preparing an aluminum-based powder metallurgy composite material rail transit brake disc according to this embodiment was implemented according to the following steps. In step one, 5% of Si, 5% of Fe, 0.5% of Ce, 0.5% of Sn, 20% of SiC, 20% of Al₂O₃, 20% of Si₃N₄, and 29% of aluminum powder (all the above are mass fractions) were added to a mixer to be mixed at a speed of 20 r/min for 50 min, to obtain a wear-resistant aluminum-based composite material powder. In step two, the wear-resistant aluminum-based composite material powder treated in step one was filled into a cold press mold for cold press under conditions of a pressure of 250 MPa, a pressurization rate of 2 mm/s, and a pressure-holding time of 10 s. In step three, the rail transit brake disc blank treated in step two was sintered under nitrogen (generally, the content of oxygen in nitrogen was less than 10 ppm, and a dew point temperature was below -40°C) protection, and at a heating rate of 10 °C/min, was first heated to 460°C for 20 min, then heated to 600°C for 30 min, and finally cooled to 490°C. In step four, the rail transit brake disc precursor treated in step three was placed in a hot press mold for pressing and shaping under conditions of a pressing temperature of 550°C, a pressure of 200 MPa, a pressurization rate of 3 mm/s, and a pressure-holding time of 20 s. In step five, the rail transit brake disc rough body treated in step four was subjected to rough turning, and burrs, flashes and surface oxide layers were removed, to complete the preparation of the aluminum-based powder metallurgy composite material rail transit brake disc.

After testing, the aluminum-based powder metallurgy composite material rail transit brake disc prepared by this method has mechanical properties as shown in Table 13. Thus, compare with the conventional brake disc made of iron metal materials, the brake disc prepared with this material has excellent tensile strength and elongation, with enhanced stiffness and plasticity properties.

**Table 13 Mechanical Properties of the aluminum-based powder metallurgy composite material rail transit brake disc**

| Material properties | Tensile strength (MPa) | Yield strength (MPa) | Elongation (%) | Rigidity (HRB) | Elasticity modulus (GPa) |
|---|---|---|---|---|---|
| Test results | 372 | 303 | 5.4 | 120 | 138 |

The above embodiments only describe several implementations of the present disclosure, which are described specifically and in detail, and therefore cannot be construed as a limitation on the patent scope of the present disclosure. It should be pointed out that those of ordinary skill in the art may also make several changes and improvements without departing from the ideas of the present disclosure, all of which fall within the protection scope of the present disclosure. Therefore, the patent protection scope of the present disclosure shall be subject to the appended claims.

## Claims

1. A lightweight wear-resistant aluminum-based powder metallurgy composite material rail transit brake disc, wherein the rail transit brake disc is composed of a wear-resistant aluminum-based composite material; the wear-resistant aluminum-based composite material consists of aluminum powder, a main alloying element, a trace element, and ceramic particles; the main alloying element is at least one selected from the group consisting of Cu, Si, Fe, Ni, and Mg; and the trace element is at least one selected from the group consisting of Sr, Ce, and Sn.

2. The lightweight wear-resistant aluminum-based powder metallurgy composite material rail transit brake disc according to claim 1, wherein
the wear-resistant aluminum-based composite material comprises, in percentage by mass:
3% to 12% of the main alloying element;
no more than 1.5% of the trace element;
20% to 75% of the ceramic particles; and
the balance of the aluminum powder .

3. The lightweight wear-resistant aluminum-based powder metallurgy composite material rail transit brake disc according to claim 1, wherein the ceramic particles are at least one selected from the group consisting of SiC, Al₂O₃, and Si₃N₄.

4. A method for preparing the lightweight wear-resistant aluminum-based powder metallurgy composite material rail transit brake disc according to any one of claims 1 to 3, comprising the following steps:
1) filling wear-resistant aluminum-based composite material mixed powder into a ring disc-shaped mold for cold press molding at room temperature and demolding, to obtain a rail transit brake disc blank;
2) sintering and molding the rail transit brake disc blank to obtain a rail transit brake disc precursor;
3) placing the rail transit brake disc precursor in a hot press shaping mold for pressing and shaping, to obtain a rail transit brake disc rough body; and
4) machining the rail transit brake disc rough body, to obtain the rail transit brake disc.

5. The method for preparing the lightweight wear-resistant aluminum-based powder metallurgy composite material rail transit brake disc according to claim 4, wherein the cold press molding is performed under conditions of a pressure of 150 MPa to 300 MPa, a pressurization rate of 1 mm/s to 5 mm/s, and a pressure-holding time of 3 s to 10 s.

6. The method for preparing the lightweight wear-resistant aluminum-based powder metallurgy composite material rail transit brake disc according to claim 4, wherein the sintering and molding comprises wax removal, sintering, and cooling.

7. The method for preparing the lightweight wear-resistant aluminum-based powder metallurgy composite material rail transit brake disc according to claim 4 or 6, wherein the sintering and molding is performed under the following conditions: at a heating rate of 8 °C/min to 15 °C/min, first heating the rail transit brake disc blank to 350°C to 450°C for 15 min to 30 min, then heating the rail transit brake disc blank to 580°C to 620°C for 25 min to 45 min, and finally cooling the rail transit brake disc blank to below 500°C under nitrogen protection.

8. The method for preparing the lightweight wear-resistant aluminum-based powder metallurgy composite material rail transit brake disc according to claim 4, wherein the pressing and shaping is performed under conditions of a pressing temperature of 500°C to 600°C, a pressure of 150 MPa to 300 MPa, a pressurization rate of 1 mm/s to 5 mm/s, and a pressure-holding time of 5 s to 30 s.

9. The method for preparing the lightweight wear-resistant aluminum-based powder metallurgy composite material rail transit brake disc according to claim 4, wherein the machining comprises removing burrs, flashes, and surface oxide layers.

10. The method for preparing the lightweight wear-resistant aluminum-based powder metallurgy composite material rail transit brake disc according to claim 4, wherein the obtained lightweight wear-resistant aluminum-based powder metallurgy composite material rail transit brake disc has a density of 2.60 g/cm³ to 2.95 g/cm³.
